# EUROPÄISCHE PATENTSCHRIFT

(11) **EP 0 537 537 B1**
(45) Veröffentlichungstag und Bekanntmachung des Hinweises auf die Patenterteilung: **20.08.1997**
(21) Anmeldenummer: 92116530.4
(22) Anmeldetag: 28.09.1992
(51) Int. Cl.: A61C 3/03

(54) **Vorrichtung zur Erzeugung von Schwingungen**
Device for generating vibrations
Dispositif générateur de vibrations

(30) Priorität: 18.10.1991 DE 4134428
(43) Veröffentlichungstag der Anmeldung: 21.04.1993
(73) Patentinhaber: Irmer, Joachim, Dr., D-88090 Immenstaad (DE)
(72) Erfinder: Irmer, Joachim, Dr., W-7997 Immenstaad (DE); Kersting, Detlef, W-7997 Immenstaad (DE)
(74) Vertreter: Engelhardt, Guido, Dipl.-Ing.

(56) Entgegenhaltungen:
- EP-A- 0 221 526
- FR-A- 2 345 136
- US-A- 1 826 434
- US-A- 4 219 619

## Beschreibung

Die Erfindung bezieht sich auf eine insbesondere in der Zahnheilkunde verwendbare Vorrichtung zur Erzeugung von Schwingungen nach dem Oberbegriff des Anspruches 1.

In der zahnärztlichen Praxis werden zum Befestigen von Kronen, Brücken oder ähnlichen Teilen auf Zahnstümpfen Bindemittel, z.B. in Form von Zement oder Kunststoff, verwendet, die vor dem Einsetzen der Krone von Hand angerührt oder maschinell angerüttelt und sodann in die Krone oder die Brücke eingebracht werden. Die Verteilung des Bindemittels ist aber sowohl beim aktiven Einzementieren als auch beim passiven Einsetzen vielfach unzulänglich, da dieses nicht in alle Spalten und Nischen der Krone und/oder des Zahnstumpfes hineinquillt. Dadurch können sich Luftblasen bilden, auch ist die Abbindezeit, während der der Patient auf einen Bißflügel beißen muß, relativ lang.

Der FR-A-23 45 136 ist zwar eine Vorrichtung nach dem Oberbegriff des Anspruches 1 zu entnehmen.

Aufgabe der Erfindung ist es, eine Vorrichtung zu schaffen, mittels der es möglich ist, das Bindemittel in einer auf einen Zahnstumpf aufzusetzenden Krone, einer Brücke oder dgl. sowie nach dem Aufsetzen der Krone auch zwischen dieser und dem Zahnstumpf in sehr einfacher Weise und in kurzer Zeit maschinell gleichmäßig zu verteilen und/oder zu verdichten, ohne daß dabei ein Patient, obwohl mitunter Arbeiten in dessen Mundhöhle ausgeführt werden, gefährdert wird. Der Bauaufwand, mittels dem dies ermöglicht wird, soll gering gehalten werden, so daß auch eine wirtschaftliche Herstellung der Vorrichtung zu bewerkstelligen ist. Vor allem aber soll die Vorrichtung eine einfache Handhabung, insbesondere beim Eingliedern von Brücken und Kronen, ermöglichen.

Gemäß der Erfindung weist die Vorrichtung zur Erzeugung von Schwingungen die in Anspruch 1 angegebenen Merkmale auf.

Insbesondere ist das zwischen dem Aktuator und dem Arbeitsgerät vorgesehene hydraulische Gestänge in einfacher Weise durch eine mit einem inkompressiblen Medium, z. B. einem medizinischen Öl, gefüllte Leitung gebildet, in die an dem dem Aktuator zugeordneten Ende ein durch dessen Hubglied betätigbarer Kolben eingesetzt und deren dem Arbeitsgerät zugeordnetes Ende durch eine Membran oder einen Faltenbalg verschlossen ist, wobei die Leitung zumindest teilweise flexibel und mittels Schraubverschlüssen an einen den Kolben aufnehmenden Zylinder und dem Arbeitsgerät oder einem Zwischenstück angeschlossen ist.

Des weiteren ist es angebracht, an die Leitung, vorzugsweise im Bereich des Zylinders, eine Einrichtung zum Ausgleich von Flüssigkeitsverlusten und/oder eine Druckmeßeinrichtung anzuschließen und den Kolben und/oder die Membran über ein kugelförmig ausgebildetes Zwischenstück mit dem Hubglied des Aktuators bzw. mit dem Arbeitsgerät zusammenwirken zu lassen.

Die die Leitung abschließende Membran kann unmittelbar in einem als Resonator ausgebildeten vorzugsweise mit einem Griffstück versehenen Arbeitsgerät eingesetzt sein. In diesem Fall ist es angebracht, der Membran ein Druckstück aus einem expandierten virginalen PTFE-Werkstoff zuzuordnen, das als quaderförmiges Bißkissen ausgebildet ist.

Das Arbeitsgerät kann aber auch als in einem Griffstück eingesetzter Füllungsstempel ausgebildet sein, auf den die Membran oder der Faltenbalg unmittelbar oder über Zwischenglieder einwirkt.

Wird eine Vorrichtung zur Erzeugung von Schwingungen gemäß der Erfindung durch einen mit einem Hubglied versehenen Aktuator gebildet, der über ein hydraulisches Gestänge mit einem Arbeitsgerät verbunden ist, so ist es möglich, die von dem Aktuator erzeugbaren mechanischen Schwingungen auf das Arbeitsgerät und somit auf ein zu behandelndes Teil, beispielsweise eine Krone oder eine Brücke, zu übertragen. Auf diese Weise ist zuverlässig gewährleistet, daß Bindemittel sowohl in der Krone als auch nach deren Einsetzen zwischen dieser und dem Zahnstumpf gleichmäßig verteilt und verdichtet wird. Das Bindemittel wird dabei gezwungen, in sämtliche Spalte und Nischen der Krone und des Zahnstumpfes einzudringen, so daß nicht nur die Befestigung verbessert wird, sondern es werden auch Luftblasen vermieden und die Abbindezeit wird gegenüber den bekannten Verfahrensweisen verkürzt.

Außerdem ist die Handhabung der Vorrichtung sehr einfach, da die durch den Aktuator hervorgerufenen mechanischen Schwingungen, die über das hydraulische Gestänge dem Arbeitsgerät zugeführt werden, ohne Schwierigkeiten auf das zu behandelnde Teil zu übertragen sind. Und da ein Patient lediglich mit dem Arbeitsgerät, das in einem Frequenzbereich von ca. 40 bis 100 Hz schwingt, in Berührung kommt, ist ein Einsatz der vorschlagsgemäß ausgebildeten Vorrichtung in der Zahnheilkunde und eine Behandlung von Patienten, zumal keine aktiven elektrisch betriebene Komponenten in dessen Mundhöhle eingeführt werden, mit dieser gefahrlos.

In der Zeichnung sind einige Ausführungsbeispiele der gemäß der Erfindung ausgebildeten Vorrichtung zur Erzeugung von Schwingungen dargestellt, die nachfolgend im einzelnen erläutert sind. Hierbei zeigen:
- Figur 1: eine mit einem Steuergerät versehene Vorrichtung zur Erzeugung von Schwingungen in Ansicht, mit unterschiedlichen an dem Aktuator anschließbare Resonatoren und Füllungsstempel,
- Figur 2: einen durch einen Elektromotor gebildeten Aktuator mit über ein hydraulisches Gestänge mit diesem verbundenen Resonator, teilweise im Schnitt,
- Figuren 3 und 4: unterschiedliche Ausgestaltungen des Resonators gemäß Figur 2 in vergrößerten Darstellungen,
- Figur 5: einen als Rotationsmotor ausgebildeten Aktuator,
- Figur 6: ein als Füllungsstempel gestaltetes Arbeitsgerät,
- Figur 7: einen Ausschnitt aus Figur 6, in einer vergrößerten Darstellung, und
- Figur 8: eine andersartige Ausführungsform eines als Füllungsstempel ausgebildeten Arbeitsgerätes.

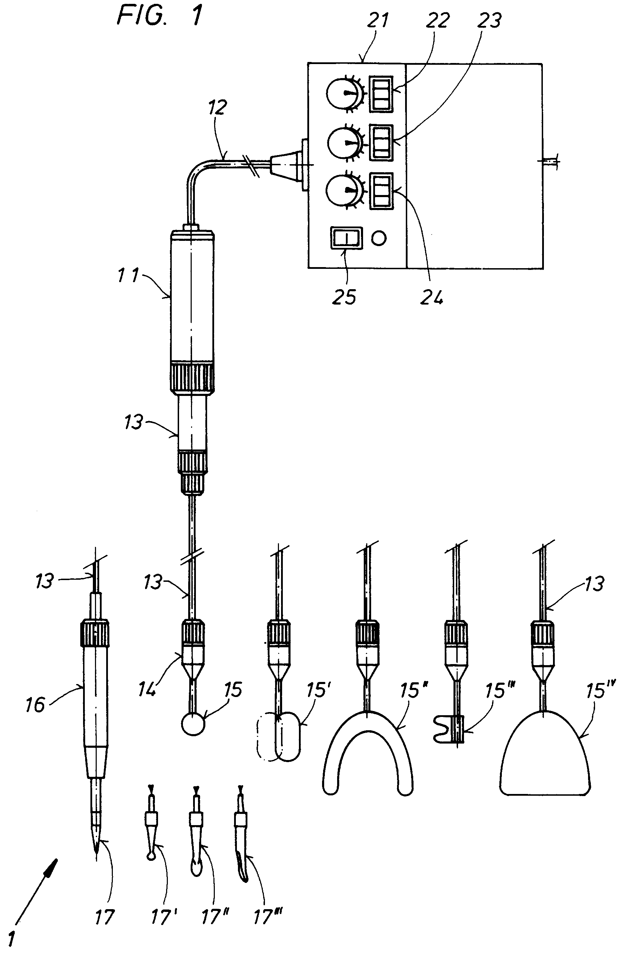

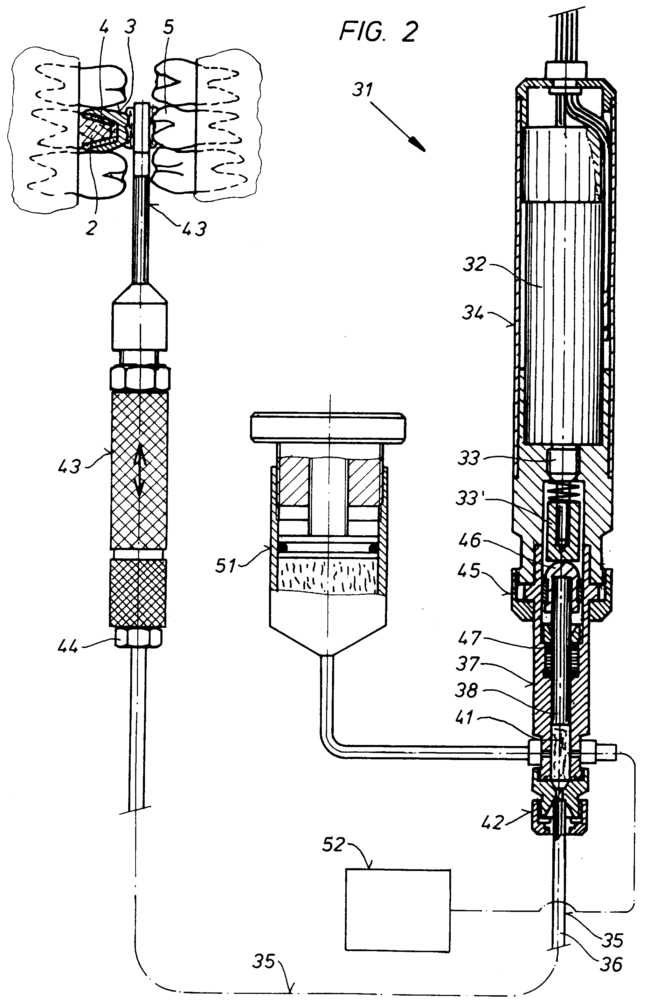

Die in Figur 1 dargestellte und mit 1 bezeichnete Vorrichtung ist insbesondere in der Zahnheilkunde einsetzbar und dient zur Übertragung von mechanischen Schwingungen, um durch diese das, wie dies in den Figuren 2 bis 4 gezeigt ist, zwischen einer auf einen Zahnstumpf 2 aufzusetzenden Zahnkrone 3 und diesem befindlichen Bindemittel 4 in kurzer Zeit gleichmäßig zu verteilen. Die Vorrichtung 1 besteht im wesentlichen aus einem über eine Stromleitung 12 an eine Stromquelle anschließbaren in unterschiedlicher Weise auszubildenden Aktuator 11, der über ein hydraulisches Gestänge 13 mit einem Arbeitsgerät verbunden ist, mittels dem die von dem Aktuator 11 erzeugbaren mechanischen Schwingungen auf das zu behandelnde Teil, beispielsweise eine Zahnkrone oder eine Brücke, übertragen werden.

Als Arbeitsgerät können gemäß Figur 1 als mit einem Griffstück 14 versehene Resonatoren 15 bis 15^{IV} für Einzelkronen (15), Doppelkronen (15'), Mehrfachkronen (15''), Schneidezahnkronen (15''') oder für ein Vollgebiß (15^{IV}) vorgesehen werden, es ist aber auch möglich, an einem Griffstück 16 Füllungsstempel 17 bis 17''' anzubringen, die eine Spitzform (17), eine Kugelspitze (17'), eine kleine Spatelspitze (17'') oder eine große Spatelspitze (17''') aufweisen können.

Mit Hilfe eines dem Aktuator 11 zugeordneten und mit einem Schalter 25 ausgestatteten Steuergerätes 21 kann, wie dies durch die Anzeigen 22, 23 und 24 veranschaulicht ist, der Hub, die Frequenz und/oder die Hubkraft eines Hubgliedes, mit dem der Aktuator 11 ausgestattet ist, eingestellt werden.

Der in Figur 2 im einzelnen dargestellte Aktuator 31 besteht aus einem in einem Gehäuse 34 angeordneten handelsüblichen Elektromagneten 32, vorzugsweise einem Umkehrhubmagneten, dessen Anker ein Hubglied 33 bildet.

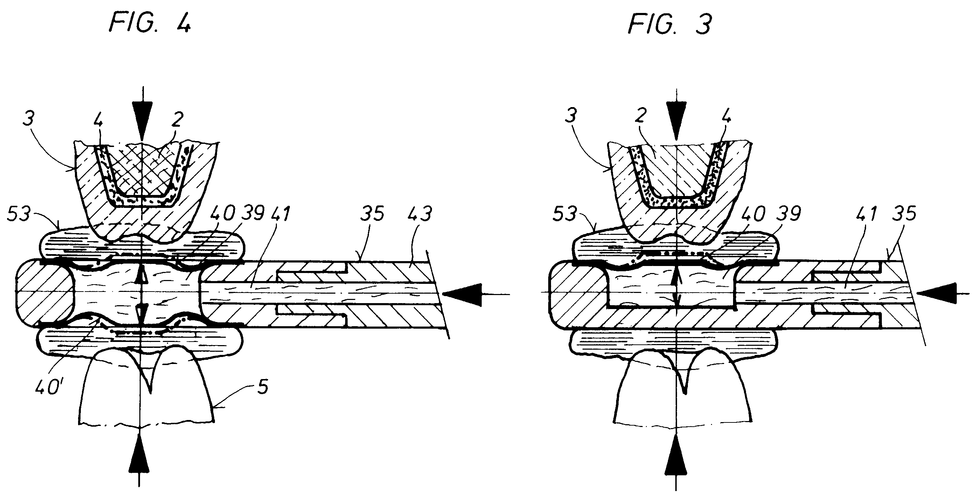

Über ein hydraulisches Gestänge 35 ist der Aktuator 31 mit einem Griffstück 43 verbunden, das gemäß Figur 3 einen durch eine Membran 40 oder gemäß Figur 4 durch zwei Membrane 40, 40' abgeschlossenen Druckraum 39 aufweist. Das hydraulische Gestänge 35 ist durch eine mit einem inkompressiblen Medium 41, beispielsweise einem medizinischen Öl, gefüllte Leitung 36 gebildet, die an dem dem Aktuator 31 zugekehrten Ende mit einem Zylinder 37 versehen, in die ein Kolben 38 eingesetzt ist, und an dem anderen Ende durch die Membran 40 bzw. 40' verschlossen ist. Mit Hilfe von Verschraubungen 42 und 44 ist die zumindest teilweise aus einem flexiblen Schlauch bestehende Leitung 36 an dem Zylinder 37 bzw. dem Griffstück 43 befestigt. Und der Zylinder 37 ist mit Hilfe einer Verschraubung 45 an dem Gehäuse 34 des Aktuators 31 angebracht. Des weiteren ist der sich zwischen dem Zylinder 37 und dem Kolben 38 ergebende Ringspalt mittels Dichtungen 47 abgedichtet.

Das Hubglied 33 des Aktuators 31 wirkt über zwei Zwischenstücke 33' und 46 auf den Kolben 38 ein, wobei, um Verkantungen zu vermeiden, das an dem Zwischenstück 33' anliegende Zwischenstück 46 kugelförmig ausgebildet ist.

Bei Erregung des Elektromagneten 32 werden die Hubbewegungen des Hubgliedes 33 auf das inkompressible Medium 41 des hydraulischen Gestänges 35 übertragen, so daß, sofern die Zahnkrone 3 sowie der Zahn 5 unmittelbar oder über ein Bißkissen 53 an den Membranen 40 bzw. 40' anliegen und auf diese eine Gegenkraft ausgeübt wird, mechanische Schwingungen mit einer Frequenz von ca. 40 bis 100 Hz erzeugt werden, die auf die Zahnkrone 3 weitergeleitet werden. Das zwischen dieser und dem Zahnstumpf 2 befindliche Bindemittel 4 wird somit in kurzer Zeit gleichmäßig verteilt, eine einwandfreie Halterung der Zahnkrone 3 ist demnach nach Erhärten des Bindemittels 4 gewährleistet.

An das hydraulische Gestänge 35 ist im Bereich des Zylinders 37 eine Ausgleichseinrichtung 51 angeschlossen, so daß evtl. Leckverluste des inkompressiblen Mediums 41 ersetzt werden können. Des weiteren kann mit Hilfe einer Meßeinrichtung 52 der sich in der Leitung 36 aufbauende Druck gemessen werden. Überbeanspruchungen eines Patienten sind somit, da bei einer vorgegebenen Druckhöhe der Aktuator 31 abgeschaltet werden kann, vermieden.

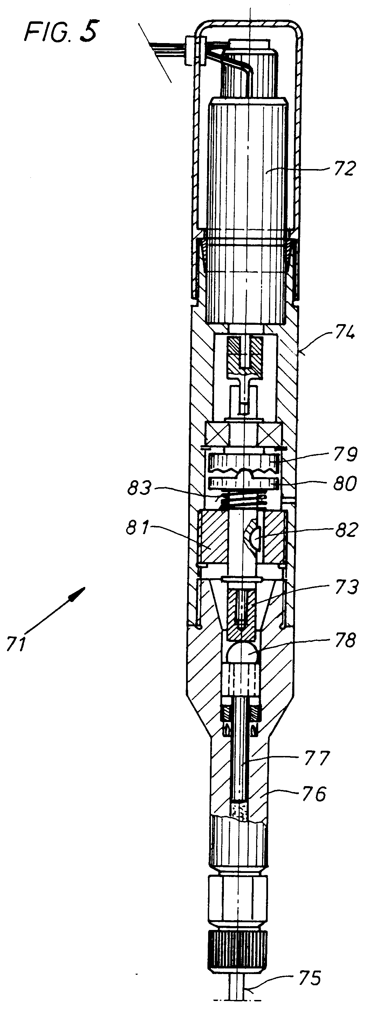

Gemäß Figur 5 ist bei dem Aktuator 71 zur Erzeugung von Schwingungen ein in einem Gehäuse 74 eingesetzter elektrischer Rotationsmotor 72 vorgesehen, der zur Umlenkung der Rotationsbewegungen seiner Abtriebswelle mit einer Nockenscheibe 79 ausgestattet ist. Die Nockenscheibe 79 wirkt mit einem Hubglied 73 zusammen, das mittels eines Keiles 82 drehfest aber entgegen der Kraft einer Druckfeder 83 axial verschiebbar in einer in dem Gehäuse 74 abgestützten Hülse 81 gehalten ist. An dem der Nockenscheibe 79 zugekehrten Ende ist an dem Hubglied 73 ein an der Nockenscheibe 79 anliegender Stößel 80 angebracht, so daß bei einer Verdrehung der Nockenscheibe 79 das Hubglied 73 axial verstellt wird. Und die Verstellbewegungen des Hubgliedes 73 werden wiederum über ein kugelförmiges Zwischenstück 78 auf einen in einen Zylinder 76 eingesetzten Kolben 77 übertragen, der auf eine Flüssigkeitssäule eines hydraulischen Gestänges 75 einwirkt.

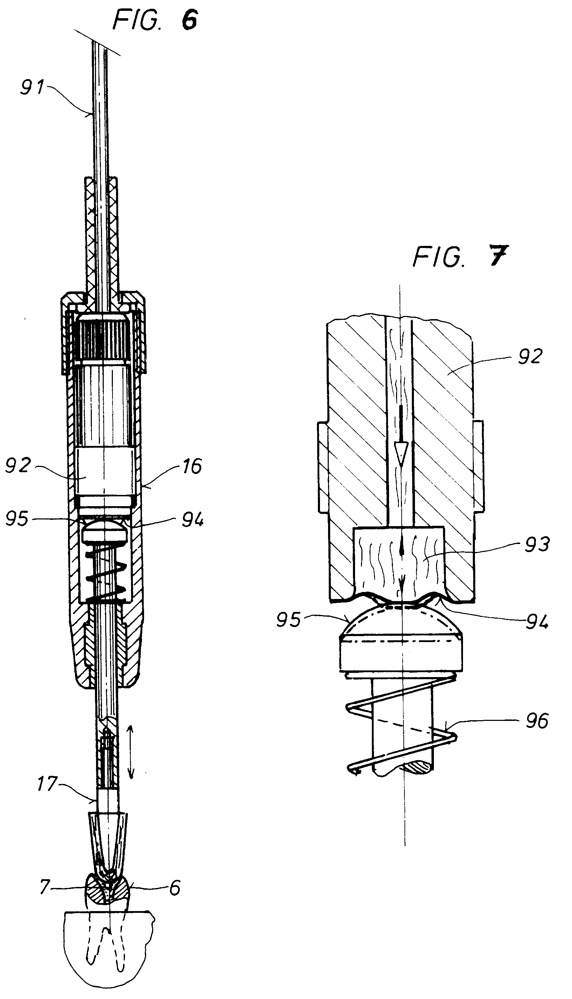

In den Figuren 6 bis 8 sind die durch mechanische Schwingungen zum Verdichten von einer in einen Zahn 6 eingebrachten Füllung 7 vorgesehene Füllungsstempel 17 dargestellt. Die Füllungsstempel 17 sind hierbei jeweils in das Griffstück 16 bzw. 16' eingesetzt und werden durch die Flüssigkeitssäule eines hydraulischen Gestänges 91 in mechanische Schwingungen versetzt.

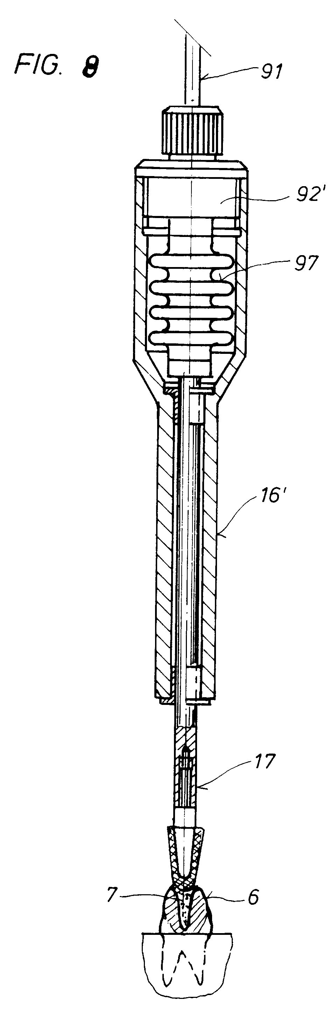

Gemäß den Figuren 6 und 7 wird dies in der Weise bewerkstelligt, daß ein am Ende des hydraulischen Gestänges 91 vorgesehenes Gehäuse 92 einen Druckraum 93 aufweist, der durch eine Membran 94 abgeschlossen ist. Und an der Membran 94 liegt durch die Kraft einer Feder 96 ein Druckstück 95 an, so daß die von einem Aktuator erzeugten Schwingungen durch die Membran 94 auf den Füllungsstempel 17 übertragen werden.

Bei der Ausgestaltung nach Figur 8 ist an einem in dem Griffstück 16' angeordneten Gehäuse 92' ein Faltenbalg 97 angebracht, der durch die über die Flüssigkeitssäule des hydraulischen Gestänges 91 übertragenen Hubbewegungen eines Aktuators axial verstellt wird, so daß dadurch der Füllungsstempel 17 in mechanische Schwingungen versetzt wird.

## Patentansprüche

1. Vorrichtung (1) zur Erzeugung von Schwingungen, insbesondere für die Zahnheilkunde, mit einem an eine Energiequelle anschließbaren Aktuator (11; 31; 71), der mit einem Hubglied (33; 73) versehen und über ein hydraulisches Gestänge (13; 35; 75; 91) mit einem Arbeitsgerät (15; 17) verbunden ist, mittels dem die von dem Aktuator (11; 31; 71) erzeugbaren Schwingungen auf ein zu behandelndes Teil, beispielsweise eine Zahnkrone (3), eine Brücke, eine Zahnfüllung (7) oder dgl. übertragbar sind,
**dadurch gekennzeichnet,**
daß der Aktuator (11; 31; 71) durch einen Elektromagneten (32), vorzugsweise einen Umkehrhubmagneten, oder durch einen mit einem Nockenrad (79) und einem mit diesem zusammenwirkenden Stößel (80) als Hubglied (73) versehenen Rotationsmotor (72) gebildet ist, daß dem Aktuator (11; 31; 71) ein Steuergerät (21) zugeordnet ist, mittels dem der Hub, die Frequenz und/oder die Hubkraft des Hubgliedes (33; 63; 73) einstellbar sind, daß das zwischen dem Aktuator (11; 31; 71) und dem Arbeitsgerät (15; 17) vorgesehene hydraulische Gestänge (13; 35; 75; 91) durch eine mit einem inkompressiblen Medium (41) gefüllte Leitung (36) gebildet ist, in die an dem Aktuator (11; 31; 71) zugeordneten Ende ein durch dessen Hubglied (33; 73) betätigbarer Kolben (38; 77) eingesetzt und deren dem Arbeitsgerät (15; 17) zugeordnetes Ende durch eine Membran (40; 40') oder einen Faltenbalg (97) verschlossen ist,
und daß die Leitung (36) zumindest teilweise durch eine flexible Schlauchleitung gebildet ist, die mittels Schraubverschlüssen (42; 44) an einen der Kolben (38) aufnehmenden Zylinder (37) und dem Arbeitsgerät (43) oder einem Zwischenstück angeschlossen ist.

2. Vorrichtung nach Anspruch 1,
**dadurch gekennzeichnet,**
daß an die Leitung (36), vorzugsweise im Bereich des Zylinders (37), eine Einrichtung (51) zum Ausgleich von Flüssigkeitsverlusten und/oder eine Druckmeßeinrichtung (52) angeschlossen sind.

3. Vorrichtung nach Anspruch 1 oder 2,
**dadurch gekennzeichnet,**
daß der Kolben (38; 77) und/oder die Membran (94) über ein kugelförmig ausgebildetes Zwischenstück (46; 78) mit dem Hubglied (33; 73) des Aktuators (31; 71) bzw. mit dem Arbeitsgerät (17) zusammenwirken.

4. Vorrichtung nach einem oder mehreren
der Ansprüche 1 bis 3,
**dadurch gekennzeichnet,**
daß die die Leitung (36) abschließende Membran (40, 40') unmittelbar in einem als Resonator ausgebildeten vorzugsweise mit einem Griffstück (43) versehenen Arbeitsgerät eingesetzt ist.

5. Vorrichtung nach einem oder mehreren der
Ansprüche 1 bis 4,
**dadurch gekennzeichnet,**
daß der Membran (40, 40') ein Druckstück aus einem expandierenden virginalen PTFE-Werkstoff zugeordnet ist, das als quaderförmiges Bißkissen (53) ausgebildet ist.

6. Vorrichtung nach einem oder mehreren
der Ansprüche 1 bis 5,
**dadurch gekennzeichnet,**
daß das Arbeitsgerät (15; 17) als in einem Griffstück (16) eingesetzter Füllungsstempel (17) ausgebildet ist, auf den die Membran (94) oder der Faltenbalg (97) unmittelbar oder über Zwischenglieder einwirkt.

## Claims

1. A device (1) for generating vibrations, in particular for dentistry, with an actuator (11; 31; 71) which can be connected to a power source and having a stroke element (33; 73), which is connected to an implement (15; 17) via a hydraulic linkage (13; 35; 75; 91) by means of which the vibrations which can be generated by the actuator (11; 31; 71) can be transmitted to a part to be treated, for example the crown of a tooth (3), a bridge, a filling (7) or similar,
**characterised in that,**
the actuator (11; 31; 71) is formed by an electromagnet (32), in a preferred embodiment a reversing solenoid magnet, or by a rotary motor (72) having a cam gear (79) and a tappet (80) acting in conjunction with the cam gear (79) as a stroke element (73), that the actuator (11; 31; 71) has a control device (21) assigned to it which allows the stroke, the frequency and/or the stroking force of the stroke element (33; 63; 73) to be adjusted, that between the actuator (11; 31; 71) and the implement (15; 17) is located a hydraulic linkage (13; 35; 75; 91) formed by a line (36) filled with an incompressible medium (41) with a piston (38; 77) inserted in it at the end nearest the actuator (11; 31; 71), the piston (38; 77) being actuated by the stroke element (33; 73) of the actuator (11; 31; 71), whilst the end of the line (36) nearest the implement (15; 17) is closed by means of a diaphragm (40; 40') or a bellows (97), and that the line (36) is at least in part made up of a flexible hose which is connected by means of screw connections (42; 44) to a cylinder (37) holding the piston (38) and to the implement (43) or an adapter.

2. The device in accordance with claim 1,
**characterised in that,**
a device (51) for compensating for losses of liquid and/or a pressure gauge (52) are connected to the line (36), in a preferred embodiment in the area of the cylinder (37).

3. The device in accordance with claim 1 or 2,
**characterised in that,**
the piston (38; 77) and/or the diaphragm (94) interact with the stroke element (33; 73) of the actuator (31; 71) or with the implement (17) via a ball-shaped adapter (46; 78).

4. The device in accordance with one or more
of claims 1 to 3,
**characterised in that,**
the diaphragm (40, 40') which seals the line (36) is inserted directly in an implement which is formed as a resonator and which, in a preferred embodiment, is provided with a handle (43).

5. The device in accordance with one or more
of claims 1 to 4,
**characterised in that,**
a pad made from an expanded virgin PTFE material is assigned to the diaphragm (40, 40') and is formed as a block-shaped bite pad (53).

6. The device in accordance with one or more
of claims 1 to 5,
**characterised in that,** the implement (15; 17) is formed as a filling punch (17) inserted in a handle (16) and the diaphragm (94) or bellows (97) act on the filling punch (17) either directly or through adapters.

## Revendications

1. Dispositif (1) générateur de vibrations, notamment dans le domaine de l'odontologie, comprenant un actuateur (11; 31; 71) branché sur une source d'énergie, muni d'un élément de levage (33; 73) et lié par l'intermédiaire d'une tringlerie hydraulique (13; 35; 75; 91) à une unité de travail (15; 17), par laquelle les vibrations générées par l'actuateur (11; 31; 71) se laissent transmettre sur un organe à traiter, p.ex. une couronne de dent (3), un pont dentaire, un plombage (7) ou un objet similaire,
caractérisé en ce que
l'actuateur (11; 31; 71) est formé par un solénoïde (32), de préférence un solénoïde à inversion, ou par un moteur rotatif (72) équipé d'une roue à came (79) et d'un poussoir (80) en tant qu'élément élévateur (73) collaborant avec celle-ci, qu'il est assigné à l'actuateur (11; 31; 71) une unité de commande (21) permettant de régler la course, la fréquence et/ou la force de levage de l'élément élévateur (33; 63; 73), que la tringlerie hydraulique (13; 35; 75; 91) prévue entre l'actuateur (11; 31; 71) et l'unité de travail (15; 17) est formée par une conduite (36) remplie d'un milieu non compressible (41), dans laquelle il est inséré, dans l'extrémité assignée à l'actuateur (11; 31; 71), un piston (38; 77) actionné par son élément de levage (33; 73) et dont l'extrémité assignée à l'unité de travail (15; 17) est obturée par un diaphragme (40; 40') ou un soufflet à plis (97) et que la conduite (36) consiste du moins partiellement d'un tuyau flexible branché au moyen de raccords à vis (42; 44) sur un cylindre (37) recevant le piston (38) et sur l'unité de travail (43) ou sur une pièce intermédiaire.

2. Dispositif d'après la revendication 1,
caractérisé en ce que
sur la conduite (36), de préférence à l'endroit du cylindre (37), il est branché un équipement (51) servant à compenser des pertes de fluide et/ou un équipement de mesure des pressions (52).

3. Dispositif d'après la revendication 1 ou 2,
caractérisé en ce que
le piston (38; 77) et/ou le diaphragme (94) collaborent par l'intermédiaire d'une pièce intermédiaire sphérique (46; 78) avec l'élément de levage (33; 73) de l'actuateur (31; 71) ou avec l'unité de travail (17).

4. Dispositif d'après une ou plusieurs des revendications 1 à 3,
caractérisé en ce que
le diaphragme (40, 40') obturant la conduite (36) est inséré directement dans une unité de travail conçue en tant que résonateur et équipée d'une poignée (43).

5. Dispositif d'après une ou plusieurs des revendications 1 à 4,
caractérisé en ce
qu'il est assigné au diaphragme (40, 40') une pièce de pression consistant d'un matériau originaire dilatant PTFE sous la forme d'un coussin parallélépipède de morsure (53).

6. Dispositif d'après une ou plusieurs des revendications 1 à 5,
caractérisé en ce que
l'unité de travail (15; 17) est conçue sous la forme d'un piston rempli (17) sur lequel agissent directement ou par des éléments intermédiaires, le diaphragme (94) ou le soufflet à plis (97).
